# EUROPÄISCHE PATENTSCHRIFT

(11) **EP 2 132 849 B1**
(45) Veröffentlichungstag und Bekanntmachung des Hinweises auf die Patenterteilung: **10.04.2019**
(21) Anmeldenummer: 08706395.4
(22) Anmeldetag: 10.03.2008
(51) Int. Cl.: H02G 9/10

(54) **UNTERFLURVERTEILER**
FLUSH-MOUNT JUNCTION
DISTRIBUTEUR SOUTERRAIN

(30) Priorität: 08.03.2007 CH 3732007; 17.09.2007 CH 14432007
(43) Veröffentlichungstag der Anmeldung: 16.12.2009
(73) Patentinhaber: Almatec AG, 6170 Schüpfheim (CH); LIC Langmatz GmbH, 82487 Garmisch-Partenkirchen (DE)
(72) Erfinder: HERTLI, Alfred, 6072 Sachseln OW (CH); WULF, Stephan, 82467 Garmisch (DE)
(74) Vertreter: Rentsch Partner AG
(86) Internationale Anmeldenummer: PCT/CH2008/000097
(87) Internationale Veröffentlichungsnummer: WO 2008/106818

(56) Entgegenhaltungen:
- EP-A- 0 605 118
- EP-A- 0 994 543
- DE-A1- 3 423 184
- FR-A- 2 810 807

## Beschreibung

### TECHNISCHES GEBIET

Die vorliegende Erfindung betrifft einen Unterflurverteiler mit Verteilerkasten zur Aufnahme elektrischer und/oder elektronischer Komponenten insbesondere für die Übermittlungstechnik gemäss dem Oberbegriff des Patentanspruchs 1.

### STAND DER TECHNIK

Derartige Unterflurverteiler sind in verschiedenen Ausführungen bekannt und kommen vor allem im innerstädtischen Bereich zum Einsatz, wo es aus Platz- und/oder ästhetischen Gründen vielfach schwierig ist, einen Standort für das Aufstellen eines Verteilerkastens in Form eines sogenannten Outdoor-Shelters bewilligt zu bekommen. Unterflurverteiler werden, wie ihr Name schon sagt, meist vollständig und bündig mit der Erdgleiche in einen Schacht eingebaut und sind mit aufklappbaren, begehbaren sowie ggf. auch befahrbaren Deckeln versehen.

Zum Schutz der im Verteilerkasten eingebauten elektrischen und/oder elektronischen Komponenten gegen Wassereinfluss sind besondere Massnahmen erforderlich. Bei den aus DE G 93 14 624.8 und DE 299 19 351 U1 bekannten Unterflurverteilern sind hierzu verschiedene Dichtungen vorgesehen sowie beim letztgenannten Dokument zusätzlich ein Kanalanschluss zur Ableitung von Kondenswasser aus dem Schacht.

Ein Unterflurverteiler gemäss dem Oberbegriff des Patentanspruchs 1 ist aus EP 0 994 543 A1 bekannt. Bei der bekannten Konstruktion ist die Tauchglocke translatorisch aus dem Schacht heraus bewegbar und kann ausserhalb des Schachtes um 90° verschwenkt. werden. Der Schachtdeckel wird zusammen mit der Tauchglocke translatorisch bewegt.

DE 3423184 A1 beschreibt einen Unterflurverteiler mit Verteilerkasten zur Aufnahme elektrischer und/oder elektronischer Komponenten, wobei der Verteilerkasten in einem mit einem zweiteiligen, bezüglich seiner Teile jeweils einzeln schwenkbaren Schachtdeckel versehenen Schacht des Unterflurverteilers angeordnet ist. Der Verteilerkasten ist ebenfalls unter Verschwenken um 90° nach oben aus dem Schacht heraus bewegbar.

Bei dem aus FR 2 810 807 A1 bekannten Unterflurverteiler lässt sich ein einstückig ausgebildeter, schwenkbarer Schachtdeckel unabhängig von einem in einen Schacht schwenkbaren Verteilerkasten bewegen und bei ausgeschwenktem Verteilerkasten zur Herstellung einer Montageplattform schliessen.

EP 0605118 A2 beschreibt ein zur Unterfluranordnung ausgebildetes Gehäuse für elektronische Komponenten, in welchem ein Ventilator zur Kühlung der Komponenten vorhanden ist.

### DARSTELLUNG DER ERFINDUNG

Eine wirksame und dauerhafte Abdichtung der Unterflurverteiler ist schwierig, aufwendig und bedarf der Wartung. Sofern ein Kanalanschluss benötigt wird, muss ein solcher entweder extra vorgesehen oder der Einbauort des Unterflurverteilers in der Nähe eines vorhandenen Kanalanschlusses gewählt werden. Beides kann sich auf die Wahl des Einbauortes einschränkend auswirken.

Die Erfindung stellt sich die Aufgabe, einen Unterflurverteiler der eingangs genannten Art anzugeben, bei dem der Verteilerkasten und die in ihm eingebauten elektrischen und/oder elektronischen Komponenten in einfacher Weise vor Wassereinflüssen geschützt ist/sind und der keinen Kanalanschluss benötigt.

Diese Aufgabe wird erfindungsgemäss gelöst durch einen Unterflurverteiler gemäss Anspruch 1. Dieser ist demnach dadurch gekennzeichnet, dass der Schachtdeckel unabhängig von der ersten Tauchglocke bewegbar ist und der Schachtdeckel mindestens zweiteilig ausgebildet und ein Teil des Schachtdeckels nach dem Ausschwenken der ersten Tauchglocke zur Herstellung einer Montageplattform schliessbar ist.

In der ersten Tauchglocke ist der Verteilerkasten im ersten Schacht gegen Wassereinfluss geschützt angeordnet. Selbst wenn Wasser in den ersten Schacht eindringen und sich darin aufstauen sollte, kann das Waser nicht mit dem Verteilerkasten und den darin enthaltenen Komponenten in Berühung kommen, weil sich in der ersten Tauchglocke eine Luftblase ausbildet. Der Verteilerkasten braucht in der ersten Tauchglocke daher selbst nicht wasserdicht ausgebildet zu sein.

Die erste Tauchglocke kann relativ zum Verteilerkasten mit ausreichend Überstand nach unten ausgebildet werden, so dass sich der Verteilerkasten selbst dann noch vollständig in der Luftblase befindet, wenn der Schacht vollständig mit Wasser geflutet sein oder sogar selbst z.B. bis zu 10 cm unter Wasser stehen sollte.

Durch die erste Tauchglocke erübrigen sich Abdichtungsmassnahmen gegen Wasser. Dies erlaubt auch eine einfache Ausbildung des Schachtdeckels, mit dem der erste Schacht nach oben abgedeckt ist, die zudem mehrteilig ist, was sein Öffnen und Schliessen erleichtert, einen weiter unten noch beschriebenen zusätzlichen Vorteil hat und im Rahmen der Erfindung auch so vorgesehen ist. Auch nach unten kann der erste Schacht offen sein, so dass eingedrungenes Wasser einfach ins Erdreich versickern kann. Ein Kanalanschluss ist insofern nicht erforderlich, allerdings auch nicht von Nachteil. Abdichtungen sind auch im Bereich von Kabeldurchführungen z.B. durch die Schachtwände nicht erforderlich.

Im Rahmen der Erfindung ist es weiter vorgesehen, dass der Schachtdeckel keine Verbindung zur ersten Tauchglocke aufweist, so dass der Schachtdeckel und die erste Tauchglocke unabhängig voneinander bewegt werden können.

Wie vorstehend erwähnt, ist der Schachtdeckel mehrteilig ausgebildet und zwar gemäss der Erfindung weiter derart, dass wenigstens ein Teil von ihm nach dem Ausschwenken der ersten Tauchglocke zur Herstellung einer Montageplattform wieder geschlossen werden kann. Bestückungs- oder Servicearbeiten am Verteilerkasten können dann von dieser Montageplattform aus bequem und sicher ausgeführt werden. Es verbleibt kein Loch im Boden, da der restliche Teil des ersten Schachtes von der ausgeschwenkten ersten Tauchglocke abgedeckt wird.

Zur Unterstützung des Aus- und wieder Einschwenkens der ersten Tauchglocke und dem in ihr aufgenommenen Verteilerkasten können in an sich bekannter Weise wenigstens eine, vorzugsweise jedoch zwei Gasdruckfeder/n vorgesehen sein.

Im ausgeschwenkten Zustand empfiehlt sich eine Arretierung der ersten Tauchglocke, wozu z.B. eine zusammen mit der ersten Tauchglocke schwenkbare Arretierungsstange und eine in diese einrastender Arretierungsbolzen vorgesehen sein kann.

Zum Anschluss der elektrischen und/oder elektronischen Komponenten kann wenigstens ein biegsames Kabel einfach vom ersten Schacht aus in die erste Tauchglocke durch ihre offene Seite hindurch und den darin angeordneten Verteilerkasten eingeführt sein und zwar vorzugsweise im ausgeschwenkten Zustand der ersten Tauchglocke etwa s-förmig und entlang der Innenseite des Bodens der ersten Tauchglocke.

Zur Abfuhr von Wärme von oder aus dem Verteilerkasten sind weiter vorzugsweise Mittel vorgesehen, mit denen ein Kühlluftstrom durch die erste Tauchglocke erzeugbar und führbar ist.

Diese Mittel umfassen auf der Zuluftseite vorzugsweise einen ersten Ventilator, der vorzugsweise in einer zweiten Tauchglocke angeordnet ist, wobei diese Tauchglocke mit ihrer Öffnung nach unten weiter vorzugsweise in einem zweiten Schacht des Unterflurverteilers angeordnet ist. Der Kühlluftstrom kann dabei über eine erste Rohrverbindung durch Wandungen des ersten und des zweiten Schachtes zwischen der ersten und der zweiten Tauchglocke geführt sein.

Die erste Rohrverbindung mündet bei eingeschwenkter erster Tauchglocke in die erste Tauchglocke mit Vorteil etwa auf Höhe von deren unterer Öffnung, damit die erste Tauchglocke über die erste Rohrverbindung nicht entlüftet wird, wenn der erste Schacht mit Wasser geflutet ist. Auch mündet die erste Rohrverbindung vorzugsweise im Bereich derjenigen Wandung der ersten Tauchglocke in die erste Tauchglocke, welche im ausgeschwenkten Zustand der ersten Tauchglocke die Oberseite der ersten Tauchglocke bildet

Auf der Abluftseite ist, dem zweiten Schacht vorzugsweise diametral gegenüberliegend, vorzugsweise ein dritter Schacht vorhanden, wobei der Kühlluftstrom über eine zweite Rohrverbindung durch Wandungen des ersten und des dritten Schachtes geführt sein kann. In dem dritten Schacht kann ein den ersten Ventilator unterstützender zweiter Ventilator in einer dritten Tauchglocke vor Wasser geschützt vorgesehen sein.

Im ersten Schacht ist der Kühlluftstrom durch Luftleitmittel um den Verteilerkasten in der ersten Tauchglocke herum und/oder durch diesen hindurch geführt.

Um den Kühlluftstrom durch den Verteilerkasten durchzuführen, kann dieser mit Luftein- und austrittsöffnungen sowie den Lufteintrittsöffnungen nachgeordnet, mit einem Filter und einem dritten Ventilator versehen sein. Die Luftaustrittsöffnungen können mit einer Überdruckklappe verschliessbar ausgebildet sein.

So wie der erste Schacht sind auch der zweite und/oder der dritte Schacht vorzugsweise mit einem Schachtdeckel abgedeckt. Um einen wirksamen Ein- bzw. Austritt des Kühlluftstromes zu ermöglichen, sind diese Schachtdeckel jedoch mit Lüftungsöffnungen versehen. Um den Schmutz aufzufangen, der durch diese Lüftungsöffnungen eindringen kann, können herausnehmbare Auffangbehälter über den Tauchglocken vorgesehen sein.

Über die Lüftungsöffnungen kann natürlich auch Wasser in die Schächte eindringen, weshalb diese, so wie der erste Schacht, mit Mitteln versehen sein sollten, damit in sie eingedrungenes Wasser ablaufen kann.

Durch den wenigstens einen zusätzlichen Schacht muss der erste Schacht zur Aufnahme der Mittel für die Erzeugung des Kühlluftstromes nicht extra grösser ausgebildet werden. Im Hinblick auf die Stabilität des in den meisten Anwendungsfällen sowieso schon recht grossen ersten Schachtes und das Gewicht seines Schachtdeckels kann dies von entscheidender Bedeutung für die Realisierbarkeit sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: einen ins Erdreich versenkbaren ersten Schacht mit darin eingeschwenkter erster Tauchglocke;
- Fig. 2: den ersten Schacht mit ausgeschwenkter erster Tauchglocke, wobei diese seitlich von hinten zu sehen ist;
- Fig. 3: den ersten Schacht mit ausgeschwenkter erster Tauchglocke, wobei diese seitlich von vorn zu sehen ist, so dass auch ein in der ersten Tauchglocke angeordneter Verteilerkasten sichtbar ist;
- Fig. 4: in einer Ansicht etwa gemäss Fig. 3 eine bevorzugte Art, ein Kabel vom ersten Schacht aus in den Verteilerkasten einzuführen;
- Fig. 5: in einem Längsschnitt eine Ausführungsform mit einen ersten Schacht mit darin eingeschwenkter Tauchglocke und einem Verteilerkasten etwa gemäss Fig. 1, wobei jedoch zusätzlich ein Abluft- und ein Zuluftschaft sowie Mittel zur Erzeugung und Führung eines Kühlluftstromes vorgesehen sind;
- Fig. 6: die Ausführungsform von Fig. 5 in einem Horizontalschnitt; und
- Fig. 7: in einer Darstellung gemäss Fig. 5 eine Ausführungsform, bei welcher der Kühlluftstrom durch den Verteilerkasten durchgeführt ist.

### WEG ZUR AUSFÜHRUNG DER ERFINDUNG

In allen Figuren bezeichnen 10 einen ersten Schacht, 20 eine erste Tauchglocke und 30 einen Verteilerkasten zur Aufnahme elektrischer und/oder elektronischer Komponenten.

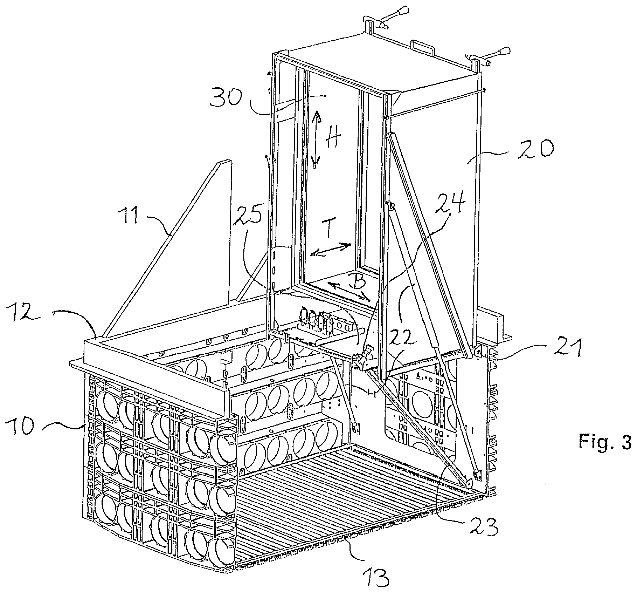

Der Verteilerkasten 30 ist in üblicher Weise etwa quaderförmig mit grösserer Höhe H als Breite B und Tiefe T ausgebildet, wie dies in Fig. 3 zu erkennen ist. Die Höhe H beträgt typischerweise z.B. 1000 mm, die Breite B 600 mm und die Tiefe T 400 mm. Die Höhe H könnte auch bis zu 1500 mm, die Breite B bis zu 1000 mm und die Tiefe T bis zu 600 mm betragen.

Fig. 3 zeigt den Verteilerkasten 30 ohne Fronttür, die bevorzugt jedoch vorhanden ist. Auch sind in Fig. 3 im Verteilerkasten 30 noch keine elektronischen und/oder elektronischen Komponenten eingebaut. Die erste Tauchglocke 20, die den Verteilerkasten 30 aufnimmt und der erste Schacht 10, der die erste Tauchglocke 20 aufnimmt, sind an die Form des Verteilerkastens 30 angepasst und dadurch ebenfalls etwa quaderförmig.

Der erste Schacht 10 ist auf seiner Oberseite mit insgesamt vier einzeln schwenkbaren, an seinem oberen Rand 12 angelenkten, etwa dreiecksförmigen Deckelelementen 11 verschliessbar.

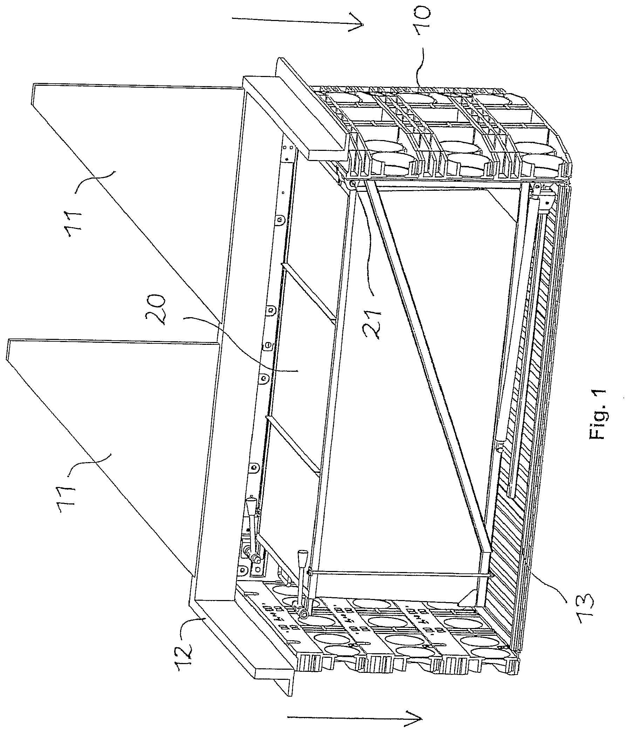

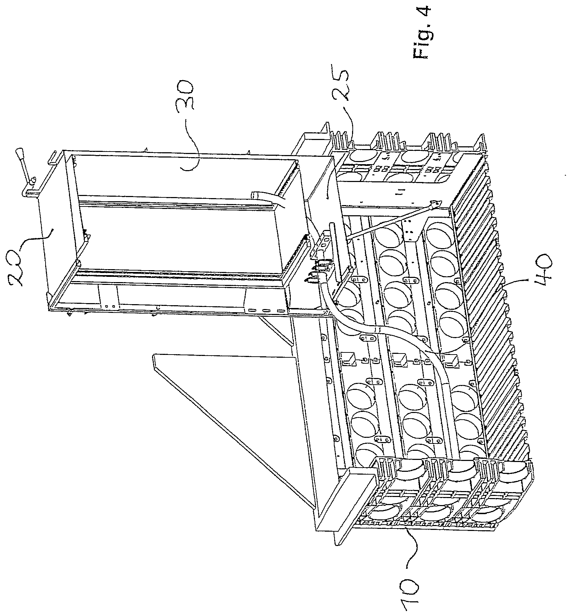

In den Figuren 1 - 4 ist die vordere Seitenwand des ersten Schachtes 10 weggeschnitten und mit ihr zwei der vier dreiecksförmigen Deckelelemente 11, um den Blick in seinen Innenraum freizugeben. In Fig. 4 ist die Schnittebene etwa in die Mitte der gesamten Anordnung gelegt, so dass auch die erste Tauchglocke 20 und der Verteilerkasten 30 aufgeschnitten sind. Der Verteilerkasten ist auch hier wieder ohne Fronttür und ohne eingebaute Komponenten dargestellt.

Der erste Schacht 10 ist dazu vorgesehen, so wie in Fig. 1 durch die Pfeile dargestellt, ins Erdreich eingelassen zu werden, so dass sein Boden 13 nach unten und sein oberer Rand 12 bündig mit dem Erdniveau zu liegen kommen. Fig. 1 zeigt die erste Tauchglocke 20 vollständig im ersten Schacht 10 versenkt, wobei ihre offene Seite nach unten gegen den Schachtboden 13 gerichtet ist. In dieser Stellung können die Deckelelemente 11 heruntergeklappt und der erste Schacht 10 dadurch verschlossen werden.

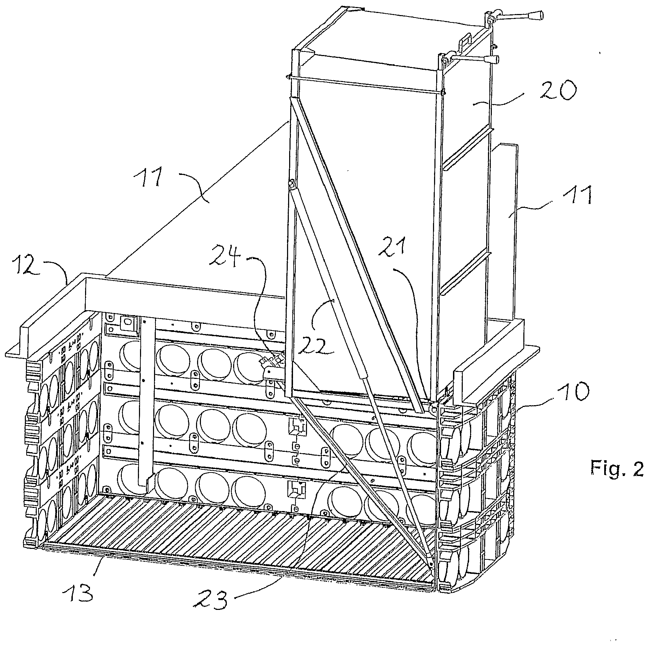

Aus der in Fig. 1 dargestellten Stellung kann die erste Tauchglocke 20 (nach dem Öffnen der Deckelelemente 11) um eine Anlenkung bei 21 am ersten Schacht 10 nach oben um 90° aus dem Schacht 10 in die in den Figuren 2 - 4 dargestellte Stellung herausgeschwenkt werden. Das Schwenken wird unterstützt durch ein Paar von Gasdruckfedern 22. In der herausgeschwenkten Stellung ist die erste Tauchglocke 20 arretiert durch eine mit ihr schwenkbare Arretierstange 23, in welche ein federbelasteter Arretierbolzen selbsttätig einrastet. Nach dem Herauschwenken können zwei der vier Deckelelemente 11 vor der ersten Tauchglocke 20 wieder geschlossen werden, so dass eine Montageebene für den bequemen Zugang zum Verteilerkasten 30 durch die offene Seite der ersten Tauchglocke 20 hindurch entsteht.

Fig. 4 zeigt beispielhaft ein flexibles Kabel 40, welches etwa s-förmig aus dem Bodenbereich des ersten Schachtes 10 in die erste Tauchglocke 20 entlang von deren Boden 25 (in der herausgeschwenkten Stellung) und in den in ihr enthaltenen Verteilerkasten 30 geführt ist. Beim Einschwenken der ersten Tauchglocke 30 in den ersten Schacht 10 wird das Kabel 40 sanft nach unten gebogen und läuft in der eingeschwenkten Stellung in einem einfachen grossen Bogen von unten in die erste Tauchglocke 20 hinein. Eine Knickung des Kabels 40 beim Schwenken der ersten Tauchglocke 20 wird durch diese Kabelführung vermieden. Im Bereich der ersten Tauchglocke 20 sind durch diese Kabelführung auch keinerlei Kabeldurchführungen erforderlich. Das Kabel 40 ist einfach durch die offene Seite der ersten Tauchglocke in diese hineingeführt. Innenseitig genügt eine einfache Befestigung des Kabels 40 am Boden 25 der ersten Tauchglocke 20 wie dargestellt.

Der Schachtrand 12 kann zusammen mit den an ihm angelenkten Deckelplatten 11 als besondere Baueinheit ausgeführt sein und vorzugsweise z.B. in Gusstechnik so stabil, dass der erste Schacht 10 bei geschlossenen Deckelplatten befahrbar ist.

Die Deckelplatten 11 müssen den ersten Schacht 10 nicht wasserdicht verschliessen. Wegen der erläuterten Schutzwirkung der ersten Tauchglocke würde selbst ein Volllaufen des Schachtes mit Wasser keine negativen Auswirkungen auf die im Verteilerkasten angeordneten elektrischen und/oder elektronischen Komponenten haben. Vorteilhaft wäre jedoch in jedem Fall, durch entsprechende Öffnungen im Boden 13 oder im unteren Bereich der Seitenwände oder, sofern möglich, durch einen Kanalanschluss, für ein wirksames Ablaufen von eingedrungenem Wasser zu sorgen.

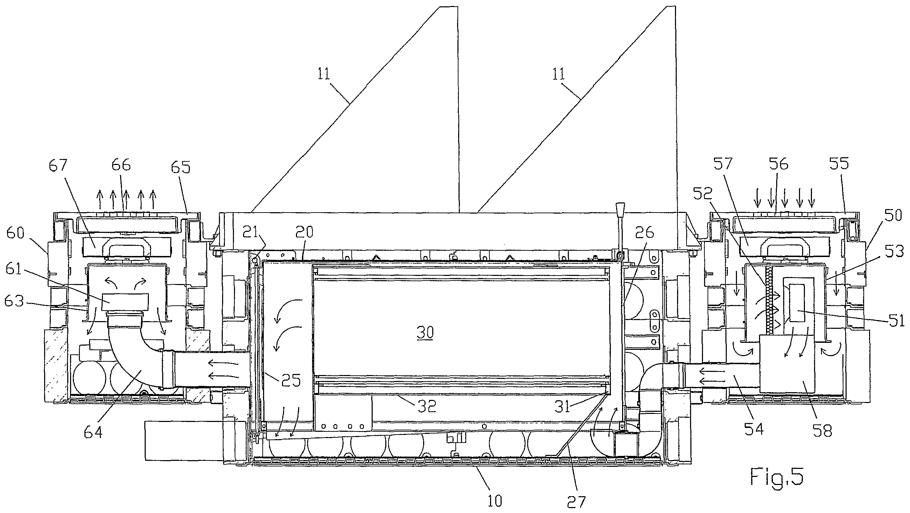

Bei den in den Fig. 5 - 7 dargestellten Ausführungsbeispielen sind zusätzlich Mittel zur Erzeugung eines Kühlluftstroms (Pfeile) durch die erste Tauchglocke 20 zur Abfuhr von Wärme von oder aus dem Verteilerkasten 30 vorgesehen.

Diese Mittel umfassen einen ersten Ventilator 51, der in einem zweiten Schacht 50 angeordnet ist, der als Zuluftschacht dient und vorzugsweise angrenzend an die der Anlenkung 21 der Tauchglocke 20 gegenüberliegende Stirnseite des quaderförmigen ersten Schachtes 10 angeordnet ist. Wie dieser ist er bündig mit der Erdgleiche ins Erdreich eingelassen bzw. dazu vorgesehen. Zusammen mit einem vorgeschaltenen Filter 52 ist der erste Ventilator 51 im zweiten Schacht 50 in einer zweiten Tauchglocke 53 angeordnet und so gegen Wasser geschützt. Der von dem ersten Ventilator 51 erzeugte Kühlluftstrom ist über eine erste Rohrverbindung 54 durch Wandungen des zweiten 50 und des ersten Schachtes 10 geführt. Im ersten Schacht 10 mündet er von unten in die erste Tauchglocke 20 etwa auf Höhe von deren unterer Öffnung sowie angrenzend an deren im ausgeschwenkten Zustand obere Wandung 26.

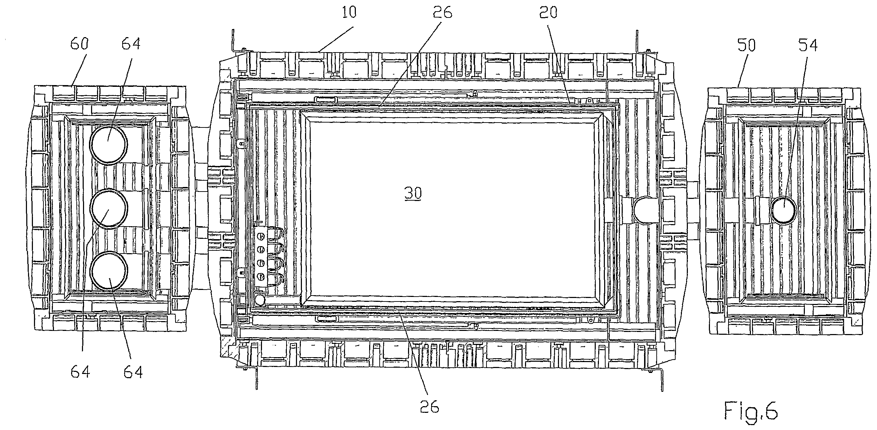

Durch ein Luftleitblech 27 zwischen dem Boden des ersten Schachtes 10 und der an die Wandung 26 angrenzenden unteren Querkante 31 des Verteilerkastens 30 sowie durch in Fig. 6 bezeichnete Abdichtungen 28 zwischen den seitlichen Wandungen der Tauchglocke 20 und den seitlichen unteren Längskanten 32 des Verteilerkastens 30 ist die Kühlluft gezwungen, auf drei Seiten in der ersten Tauchglocke 20 an dem Verteilerkasten 30 vorbeizustreichen, wobei sie Abwärme vom Verteilerkasten 30 aufnimmt und abführt.

Nach dem Passieren des Verteilerkastens 30 tritt die Kühlluft im Bereich des Bodens 25 der ersten Tauchglocke 20 nach unten aus dieser aus, strömt in dem Spalt zwischen diesem Boden 25 und der angrenzenden Stirnwand des ersten Schachtes 10 ein Stück weit nach oben und kann etwa auf halber Höhe den ersten Schacht 10 über eine zweite Rohrverbindung 64 verlassen. Diese zweite Rohrverbindung 64 mündet in einen dritten Schacht 60, der als Abluftschacht dient und vorzugsweise angrenzend an die erwähnte Stirnwand des ersten Schachtes 10 angeordnet ist. Wie dieser ist er bündig mit der Erdgleiche ins Erdreich eingelassen bzw. dazu vorgesehen.

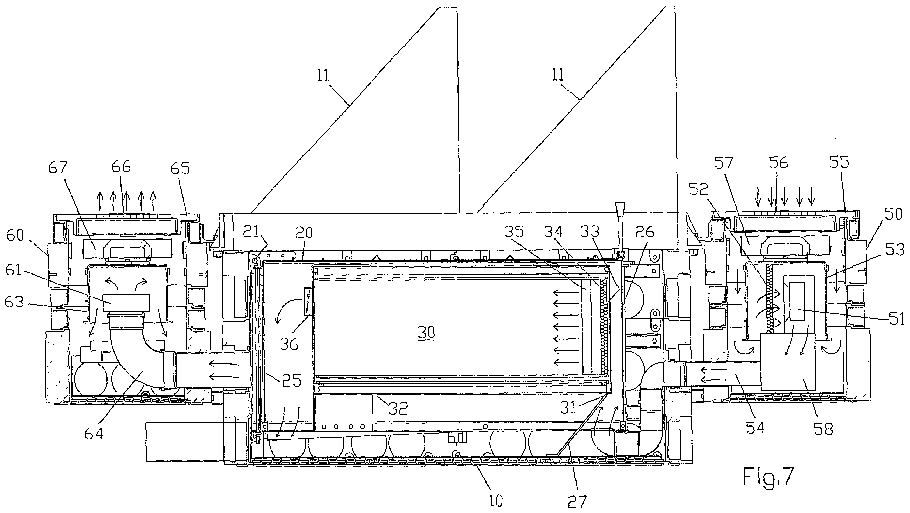

Grundsätzlich könnte die zweite Rohrverbindung 64 im dritten Schacht 60 einfach offen münden. Wie in Fig. 5 und Fig. 7 dargestellt, kann es jedoch von Vorteil sein, zur Unterstützung des ersten Ventilators 53 hier einen zweiten Ventilator 61 und zum Schutz dieses Ventilators gegen Wasser eine dritte Tauchglocke 63 vorzusehen.

Abgedeckt sind der zweite 50 und der dritte Schacht 60 durch stabile sowie ggf. befahrbare Schachtdeckel 55 bzw. 65. Diese sind mit Lüftungsöffnungen 56 bzw. 66 versehen, um den Kühlluftstrom ausreichend ungehindert ein- bzw. austreten zu lassen. Um den durch die Lüftungsöffnungen zwangsläufig eindringenden Schmutz aufzufangen sind unterhalb der Schachtdeckel 55 bzw. 65 über den Tauchglocken 53 bzw. 63 z.B. mit einem siebförmigen Boden versehene Auffangbehälter 57 bzw. 67 angeordnet, die bei Bedarf gereinigt werden können.

Der erste 50 und der zweite Schacht 60 können, wie in Fig. 5 und Fig. 7 dargestellt, erheblich kleiner und auch weniger tief als der erste Schacht 10 ausgeführt sein .

Damit es bei eindringendem Wasser im zweiten oder im dritten Schacht per Entlüftung über die Rohrverbindungen 54 oder 64 nicht zu einem Vollaufen der zweiten 53 oder der dritten Tauchglocke 63 kommt, muss sichergestellt sein, das sich der Wasserpegel in den jeweils benachbarten Schächten etwa gleich hoch einstellen kann. Dies kann z.B. durch Querverbindungen (nicht dargestellt) zwischen den benachbarten Schächten erreicht werden.

Die erste Rohrverbindung 54 bildet in ihrer in Fig. 5 und Fig 7 dargestellten Ausführungsform einen Syphon, der potentiell mit Wasser volllaufen und dadurch den Kühlluftstrom unterbrechen könnte. Um dies zu verhindern sollte der Syphon mit einer Entleerungsvorrichtung wie z.B. einen zweiten, nachgeschalteten Syphon (nicht dargestellt) versehen sein.

Die Ventilatoren 51 bzw. 61 können in ihren Tauchglocken 53 bzw. 63 in gleicher Weise wie der Verteilerkasten 30 in der ersten Tauchglocke 20 per Kabel (nicht dargestellt) einfach von unten her durch unteren Öffnungen der Tauchglocken angeschlosen werden.

Je nach Bestückung des Verteilerkastens 30 mit elektrischen oder elektronischen Komponenten und deren Abwärme muss der Kühlluftstrom ggf. unterschiedlich dimensioniert werden. Dies kann über die Leistung des ersten 51 sowie ggf. des zweiten Ventilators 61 erfolgen oder auch durch Parallelschalten mehrerer erster und/oder zweiter Ventilatoren. Andererseits können die Querschnitte vor allem im Zu- und/oder im Abluftbereich variiert werden. Fig. 6 zeigt beispielsweise im Abluftbereich drei parallel zueinander angeordnete Rohrverbindungen 64, durch welche der Strömungsquerschnitt dort verdreifacht wird. Fig. 5 und 6 zeigen ein Plenum 57, über welches ein erster Ventilator 51 mit mehreren parallelen Rohrverbindungen 54 im Zuluftbereich verbunden sein könnte.

Bei der Ausführungsform von Fig. 7 wird der Verteilerkasten 30 von der Kühlluft nicht lediglich umströmt, sondern unmittelbar durchströmt, wodurch eine wirksamere, aktive Kühlung der im Verteilerkasten installierten Komponenten erreichbar ist. Hierzu ist der Verteilerkasten im Bereich seiner in Fig. 7 rechten Wandung mit Lufteintrittsöffnungen 33 versehen, denen ein Filter 34 und ein dritter Ventilator 35 nachgeordnet sind. An der gegenüberliegenden, in Fig. 7 linken Wandung des Verteilerkastens ist eine Luftaustrittsöffnung 36 in Form einer Überdruckklappe vorgesehen.

### BEZEICHNUNGSLISTE

- 10: Schacht
- 12: oberen Rand des Schachtes
- 11: Deckelelemente
- 13: Schachtboden
- 20: Tauchglocke
- 21: Anlenkung der Tauchglocke
- 22: Gasdruckfedern
- 23: Arretierstange
- 24: Arretierbolzen
- 25: Boden der Tauchglocke
- 26: obere Wandung der Tauchglocke
- 27: Luftleitblech
- 28: Abdichtungen 28 zwischen den seitlichen Wandungen des ersten Schachtes
- 30: Verteilerkasten
- 31: unteren Querkante des Verteilerkastens
- 32: untere seitliche Längskanten des Verteilerkastens
- 33: Lufteintrittsöffnungen
- 34: Filter
- 35: dritter Ventilator
- 36: Luftaustrittsöffnung
- 40: Kabel
- 50: zweiter Schach
- 51: erster Ventilator
- 52: Filter
- 53: zweite Tauchglocke
- 54: erste Rohrverbindung
- 55: Schachtdeckel
- 56: Lüftungsöffnungen
- 57: Auffangbehälter
- 58: Plenum
- 60: dritter Schacht
- 61: zweiter Ventilator
- 63: dritte Tauchglocke
- 64: zweite Rohrverbindung
- 65: Schachtdeckel
- 66: Lüftungsöffnungen
- 67: Auffangbehälter
- H, B, T: Höhe, Breite und Tiefe des Verteilerkastens

## Patentansprüche

1. Unterflurverteiler mit Verteilerkasten (30) zur Aufnahme elektrischer und/oder elektronischer Komponenten wobei der Verteilerkasten (30) in einer ersten Tauchglocke (20) angeordnet ist, welche mit ihrer Öffnung nach unten in einem ersten Schacht (10) des Unterflurverteilers angeordnet und aus dieser Stellung um 90° nach oben aus dem Schacht (10) heraus schwenkbar ist, wobei der erste Schacht (10) bei eingeschwenkter erster Tauchglocke (20) mit einem Schachtdeckel (11) abdeckbar ist, durch gekennzeichnet, dass der Schachtdeckel (11) unabhängig von der ersten Tauchglocke (20) bewegbar ist und der Schachtdeckel mindestens zweiteilig ausgebildet und ein Teil (11) des Schachtdeckels nach dem Ausschwenken der ersten Tauchglocke (20) zur Herstellung einer Montageplattform schliessbar ist.

2. Unterflurverteiler nach Anspruch 1, dadurch gekenzeichnet, dass der Verteilerkasten (30) in der ersten Tauchglocke (20) zumindest nicht druckwasserdicht ausgebildet ist.

3. Unterflurverteiler nach einem der Ansprüche 1 - 2, **dadurch gekennzeichnet dass** wenigstens eine Gasdruckfeder (22) vorgesehen ist, um das Ausschwenken der ersten Tauchglocke(20) zu unterstützen.

4. Unterflurverteiler nach einem der Ansprüche 1 - 3, dadurch gekenzeichnet,
dass zur Arretierung der ersten Tauchglocke (20) im ausgeschwenkten Zustand eine Arretierung vorzugsweise unter Verwendung einer zusammen mit der ersten Tauchglocke schwenkbaren Arretierungsstange (23) und eines in diese einrastenden Arretierungsbolzens (24) vorgesehen ist.

5. Unterflurverteiler nach einem der Ansprüche 1 - 4, dadurch gekenzeichnet,
dass wenigstens ein biegsames Kabel (40) vom ersten Schacht (10) aus in die erste Tauchglocke (20) und den darin angeordneten Verteilerkasten (30) eingeführt ist und zwar vorzugsweise im ausgeschwenkten Zustand der ersten Tauchglocke (20) etwa s-förmig und entlang des Bodens (25) der ersten Tauchglocke (20).

6. Unterflurverteiler nach Anspruch 5, dadurch gekenzeichnet, dass das Kabel (40) am Boden (25) der ersten Tauchglocke 20) befestigt ist.

7. Unterflurverteiler nach einem der Ansprüche 1 - 6, dadurch gekenzeichnet, dass die erste Tauchglocke (20) im Schacht (10) soweit nach unter über den Verteilerkasten (30) übersteht, dass dieser sich selbst bei vollständig mit Wasser geflutetem Schacht (10) noch ganz in einer Luftblase befindet.

8. Unterflurverteiler nach einem der Ansprüche 1 - 7, **dadurch gekennzeichnet, dass** Mittel (51, 61, 35) zur Erzeugung eines Kühlluftstroms durch die erste Tauchglocke (20) zur Abfuhr von Wärme von oder aus dem Verteilerkasten (30) vorgesehen sind.

9. Unterflurverteiler nach Anspruch 8, **dadurch gekennzeichnet, dass** die Mittel zur Erzeugung eines Kühlluftstroms einen ersten Ventilator (51) umfassen, der in einer zweiten Tauchglocke (53) angeordnet ist, welche mit ihrer Öffnung nach unten in einem zweiten Schacht (50) des Unterflurverteilers angeordnet ist und dass der Kühlluftstrom über eine erste Rohrverbindung (54) durch Wandungen des ersten (10) und des zweiten Schachtes (50) von der zweiten (53) in die erste Tauchglocke (20) geführt ist.

10. Unterflurverteiler nach Anspruch 9, **dadurch gekennzeichnet, dass** die erste Rohrverbindung (54) bei eingeschwenkter erster Tauchglocke (20) auf Höhe von deren Öffnung in die erste Tauchglocke (20) mündet.

11. Unterflurverteiler nach einem der Ansprüche 9 oder 10, **dadurch gekennzeichnet, dass** die erste Rohrverbindung (54) im Bereich derjenigen Wandung (26) der ersten Tauchglocke (20) in die erste Tauchglocke (20) mündet, welche im ausgeschwenkten Zustand der ersten Tauchglocke (20) die Oberseite der ersten Tauchglocke (20) bildet

12. Unterflurverteiler nach einem der Ansprüche 8 - 11, **dadurch gekennzeichnet, dass** er einen dritten Schacht (60) umfasst und dass der Kühlluftstrom über eine zweite Rohrverbindung (64) durch Wandungen des ersten (10) und des dritten Schachtes (60) vom ersten (10) in den dritten Schacht (60) geführt ist.

13. Unterflurverteiler nach Anspruch 12, **dadurch gekennzeichnet, dass** die Mittel zur Erzeugung eines Kühlluftstroms einen den ersten Ventilator (51) unterstützenden zweiten Ventilator (61) umfassen, der in einer dritten Tauchglocke (63) angeordnet ist, welche mit ihrer Öffnung nach unten in dem dritten Schacht (60) des Unterflurverteilers angeordnet ist.

14. Unterflurverteiler nach einem der Ansprüche 8 - 13, **dadurch gekennzeichnet, dass** der Kühlluftstrom im ersten Schacht (10) durch Luftleitmittel (27, 28) in der ersten Tauchglocke (20) um den Verteilerkasten (30) herum und/oder durch diesen hindurch geführt ist.

15. Unterflurverteiler nach einem der Anprüche 8 - 14, **dadurch gekennzeichnet, dass** der Verteilerkasten (30) Lufteintrittsöffnungen (33), diesen nachgeordnet einen Filter (34) und diesem nachgeordnet einen dritten Ventilator (35) sowie, vorzugsweise gegenüberliegend, eine Luftaustrittsöffnung aufweist.

16. Unterflurverteiler nach Anpruch 15, **dadurch gekennzeichnet, dass** eine Luftaustrittsöffnung mit einer Überdruckklappe (36) versehen ist.

17. Unterflurverteiler nach einem der Ansprüche 9 - 16, **dadurch gekennzeichnet, dass** der zweite (50) und/oder der dritte Schacht(60) mit einem mit Lüftungsöffnungen (56; 66) versehenen Schachtdeckel (55, 65) abdeckbar ist/sind.

18. Unterflurverteiler nach einem der Ansprüche 9 - 17, **dadurch gekennzeichnet, dass** der zweite (50) und/oder der dritte Schacht (60) mit einem über der zweiten (53) beziehungsweise dritten Tauchglocke (63) angeordneten Auffangbehälter (57; 67) für Schmutz versehen ist/sind.

## Claims

1. Underground distributor having a distribution box (30) for receiving electrical and/or electronic components, wherein the distribution box (30) is arranged in a first submersible bell (20) which is arranged with its opening to the bottom in a first shaft (10) of the underground distributor and can be pivoted upwardly out of the shaft (10) from this position through 90°, wherein, with the first submersible bell (20) pivoted in, the first shaft (10) can be covered by a shaft cover (11), **characterized in that** the shaft cover (11) is movable independently of the first submersible bell (20) and the shaft cover is of at least two-part design and, after pivoting out the first submersible bell (20), one part (11) of the shaft cover can be closed to produce a mounting platform.

2. Underground distributor according to Claim 1, **characterized in that** the distribution box (30) in the first submersible bell (20) is designed to be at least non-pressure-watertight.

3. Underground distributor according to one of Claims 1-2, **characterized in that** at least one gas pressure spring (22) is provided in order to support the pivoting out of the first submersible bell (20).

4. Underground distributor according to one of Claims 1-3, **characterized in that**, in order to lock the first submersible bell (20) in the pivoted-out state, there is provided a locking system preferably using a locking rod (23), which can be pivoted together with the first submersible bell, and a locking bolt (24) which latches into said rod.

5. Underground distributor according to one of Claims 1-4, **characterized in that** at least one flexible cable (40) is introduced from the first shaft (10) into the first submersible bell (20) and the distribution box (30) arranged therein, to be precise, preferably in the pivoted-out state of the first submersible bell (20) approximately in an s-shaped manner and along the bottom (25) of the first submersible bell (20).

6. Underground distributor according to Claim 5, **characterized in that** the cable (40) is fastened to the bottom (25) of the first submersible bell (20).

7. Underground distributor according to one of Claims 1-6, **characterized in that** the first submersible bell (20) in the shaft (10) projects downwardly beyond the distribution box (30) to such an extent that the latter is still completely situated in an air bubble even with the shaft (10) completely flooded with water.

8. Underground distributor according to one of Claims 1-7, **characterized in that** means (51, 61, 35) for generating a cooling air flow through the first submersible bell (20) are provided for removing heat from or out of the distribution box (30).

9. Underground distributor according to Claim 8, **characterized in that** the means for generating a cooling air flow comprise a first fan (51) which is arranged in a second submersible bell (53) which is arranged with its opening to the bottom in a second shaft (50) of the underground distributor, and **in that** the cooling air flow is guided via a first pipe connection (54) through walls of the first (10) and of the second shaft (50) from the second (53) into the first submersible bell (20).

10. Underground distributor according to Claim 9, **characterized in that**, with the first submersible bell (20) pivoted in, the first pipe connection (54) opens into the first submersible bell (20) at the level of the opening of the latter.

11. Underground distributor according to either of Claims 9 and 10, **characterized in that** the first pipe connection (54) opens into the first submersible bell (20) in the region of that wall (26) of the first submersible bell (20) which forms the upper side of the first submersible bell (20) in the pivoted-out state of the first submersible bell (20).

12. Underground distributor according to one of Claims 8-11, **characterized in that** it comprises a third shaft (60), and **in that** the cooling air flow is guided via a second pipe connection (64) through walls of the first (10) and of the third shaft (60) from the first (10) into the third shaft (60).

13. Underground distributor according to Claim 12, **characterized in that** the means for generating a cooling air flow comprise a second fan (61) which supports the first fan (51) and which is arranged in a third submersible bell (63) which is arranged with its opening to the bottom in the third shaft (60) of the underground distributor.

14. Underground distributor according to one of Claims 8-13, **characterized in that** the cooling air flow in the first shaft (10) is guided by air guiding means (27, 28) in the first submersible bell (20) around the and/or through the distribution box (30) .

15. Underground distributor according to one of Claims 8-14, **characterized in that** the distribution box (30) has air inlet openings (33), a filter (34) arranged downstream of said openings and a third fan (35) arranged downstream of said filter and also, preferably opposite, an air outlet opening.

16. Underground distributor according to Claim 15, **characterized in that** an air outlet opening is provided with an overpressure flap (36).

17. Underground distributor according to one of Claims 9-16, **characterized in that** the second (50) and/or the third shaft (60) can be covered by a shaft cover (55, 65) provided with ventilation openings (56; 66).

18. Underground distributor according to one of Claims 9-17, **characterized in that** the second (50) and/or the third shaft (60) are/is provided with a collection container (57; 67) for dirt that is arranged above the second (53) or third submersible bell (63).

## Revendications

1. Distributeur souterrain avec un caisson de distributeur (30) destiné à contenir des composants électriques et/ou électroniques, dans lequel le caisson de distributeur (30) est disposé dans une première cloche d'immersion (20), qui est disposée avec son ouverture vers le bas dans un premier puits (10) du distributeur souterrain et peut pivoter à partir de cette position de 90° vers le haut hors du puits (10), dans lequel le premier puits (10) peut être couvert par un couvercle de puits (11) lorsque la première cloche d'immersion (20) y est introduite par pivotement, **caractérisé en ce que** le couvercle de puits (11) est déplaçable indépendamment de la première cloche d'immersion (20) et le couvercle de puits est réalisé au moins en deux parties et une partie (11) du couvercle de puits peut être fermée après la sortie par pivotement de la première cloche d'immersion (20) pour la réalisation d'une plate-forme de montage.

2. Distributeur souterrain selon la revendication 1, **caractérisé en ce que** le caisson de distributeur (30) est réalisé d'une façon au moins non étanche à l'eau sous pression dans la première cloche d'immersion (20).

3. Distributeur souterrain selon l'une quelconque des revendications 1 à 2, **caractérisé en ce qu'**il est prévu au moins un vérin pneumatique (22) afin d'assister la sortie de la première cloche d'immersion (20).

4. Distributeur souterrain selon l'une quelconque des revendications 1 à 3, **caractérisé en ce qu'**il est prévu, pour bloquer la première cloche d'immersion (20) dans l'état sorti, un blocage de préférence en utilisant une tige de blocage (23) pouvant pivoter de concert avec la première cloche d'immersion (20) et un boulon de blocage (24) s'engageant dans celle-ci.

5. Distributeur souterrain selon l'une quelconque des revendications 1 à 4, **caractérisé en ce qu'**au moins un câble flexible (40) est introduit à partir du premier puits (10) dans la première cloche d'immersion (20) et dans le caisson de distributeur (30) disposé dans celle-ci, notamment de préférence dans l'état sorti de la première cloche d'immersion (20), sensiblement en forme de S et le long du fond (25) de la première cloche d'immersion (20).

6. Distributeur souterrain selon la revendication 5, **caractérisé en ce que** le câble (40) est fixé au fond (25) de la première cloche d'immersion (20).

7. Distributeur souterrain selon l'une quelconque des revendications 1 à 6, **caractérisé en ce que** la première cloche d'immersion (20) dépasse dans le puits (10) vers le bas au-delà du caisson de distributeur (30) à un point tel que celui-ci se trouve encore entièrement dans une bulle d'air même lorsque le puits (10) est entièrement submergé par l'eau.

8. Distributeur souterrain selon l'une quelconque des revendications 1 à 7, **caractérisé en ce qu'**il est prévu des moyens (51, 61, 35) pour produire un courant d'air de refroidissement à travers la première cloche d'immersion (20) pour l'évacuation de chaleur du ou hors du caisson de distributeur (30).

9. Distributeur souterrain selon la revendication 8, **caractérisé en ce que** les moyens pour produire un courant d'air de refroidissement comprennent un premier ventilateur (51), qui est disposé dans une deuxième cloche d'immersion (53), qui est disposée avec son ouverture vers le bas dans un deuxième puits (50) du distributeur souterrain, et **en ce que** le courant d'air de refroidissement est conduit de la deuxième (53) à la première cloche d'immersion (20) par un premier raccordement tubulaire (54) à travers des parois du premier puits (10) et du deuxième puits (50).

10. Distributeur souterrain selon la revendication 9, **caractérisé en ce que** le premier raccordement tubulaire (54) débouche dans la première cloche d'immersion (20) à hauteur de son ouverture lorsque la première cloche d'immersion (20) est introduite par pivotement.

11. Distributeur souterrain selon une des revendications 9 ou 10, **caractérisé en ce que** le premier raccordement tubulaire (54) débouche dans la première cloche d'immersion (20) dans la région de la paroi (26) de la première cloche d'immersion (20), qui dans l'état sorti de la première cloche d'immersion (20) forme le côté supérieur de la première cloche d'immersion (20).

12. Distributeur souterrain selon l'une quelconque des revendications 8 à 11, **caractérisé en ce qu'**il comprend un troisième puits (60) et **en ce que** le courant d'air de refroidissement est conduit du premier puits (10) au troisième puits (60) à travers des parois du premier puis (10) et du troisième puits (60).

13. Distributeur souterrain selon la revendication 12, **caractérisé en ce que** les moyens pour produire un courant d'air de refroidissement comprennent un second ventilateur (61) en appoint du premier ventilateur (51), qui est disposé dans une troisième cloche d'immersion (63), qui est disposée avec son ouverture vers le bas dans le troisième puits (60) du distributeur souterrain.

14. Distributeur souterrain selon l'une quelconque des revendications 8 à 13, **caractérisé en ce que** le courant d'air de refroidissement est conduit dans le premier puits (10) par des moyens de guidage d'air (27, 28) dans la première cloche d'immersion (20) autour du caisson de distributeur (30) et/ou à travers celui-ci.

15. Distributeur souterrain selon l'une quelconque des revendications 8 à 14, **caractérisé en ce que** le caisson de distributeur (30) présente des ouvertures d'entrée d'air (33), un filtre (34) disposé en aval de celles-ci et un troisième ventilateur (35) disposé en aval de celui-ci, ainsi que, de préférence en face, une ouverture de sortie d'air.

16. Distributeur souterrain selon la revendication 15, **caractérisé en ce qu'**une ouverture de sortie d'air est munie d'un clapet de surpression (36).

17. Distributeur souterrain selon l'une quelconque des revendications 9 à 16, **caractérisé en ce que** le deuxième puits (50) et/ou le troisième puits (60) peut/peuvent être recouvert(s) par un couvercle de puits (55, 65) muni d'ouvertures de ventilation (56; 66).

18. Distributeur souterrain selon l'une quelconque des revendications 9 à 17, **caractérisé en ce que** le deuxième puits (50) et/ou le troisième puits (60) est/sont muni(s) d'un réservoir de capture (57; 67) pour la boue disposé au-dessus de la deuxième (53) ou de la troisième (63) cloche d'immersion.
